# EUROPÄISCHE PATENTSCHRIFT

(11) **EP 2 423 674 B1**
(45) Veröffentlichungstag und Bekanntmachung des Hinweises auf die Patenterteilung: **11.09.2013**
(21) Anmeldenummer: 11167565.8
(22) Anmeldetag: 26.05.2011
(51) Int. Cl.: G01N 21/71, C21C 5/46

(54) **Verfahren zur spektroskopischen Temperatur- und Analysebestimmung von flüssigen Metallbädern in metallurgischen Gefäßen, insbesondere Konvertern**
Method for spectroscopic temperature measurement and analysis of liquid metal baths in metallurgical containers, in particular converters
Procédé de détermination de température et d'analyse spectroscopique de bains de métal liquides dans des récipients métallurgiques, notamment des convertisseurs

(30) Priorität: 25.08.2010 DE 102010035412
(43) Veröffentlichungstag der Anmeldung: 29.02.2012
(73) Patentinhaber: SMS Siemag AG, 40237 Düsseldorf (DE)
(72) Erfinder: Reichel, Johann, 40489 Düsseldorf (DE)
(74) Vertreter: Klüppel, Walter

(56) Entgegenhaltungen:
- EP-A1- 2 327 802
- DE-A1- 3 413 589
- JP-A- 5 005 117
- US-A- 3 838 849
- US-A1- 2003 234 928

## Beschreibung

Die Erfindung betrifft ein Verfahren zur Temperatur- und spektroskopischer Analysenbestimmung von flüssigen Metallbädern und Schlacken in einem kippbaren metallurgischem Gefäß, insbesondere Konverter, mit Hilfe eines durch eine in der Gefäßwandung angeordnete Messdüse auf die Metall- bzw. Schlackenoberfläche geführten Laserstrahls eines optischen Lasersystems.

Die Messung der Temperatur und die Analysenbestimmung von flüssigen Metallbädern und Schlacken ist für die Kontrolle des zeitlichen Verlaufs des in einer metallurgischen Anlage durchzuführenden Prozesses von großer Wichtigkeit. So wird eine Verbesserung der Wirtschaftlichkeit des Blasprozesses in einem Konverter dann erzielt, wenn der Konverter bestzeitlich und optimal genutzt wird. Dies spiegelt sich in kurzen Blaszeiten und sicherem Treffen der End-Sollwerte. Endsollwerte sind in erster Linie der Gehalt und die Temperatur des Metallbades beim Blasende. Im Fall der C-Stahlerzeugung kommen noch Pund S-Gehalt und im Fall des Rostfreistahls Si, Cr, Ni, Mn und andere hinzu.

Wichtig in Bezug zur Wirtschaftlichkeit sind daneben, dass das Eisen- bzw. Chrom- und Nickelausbringen möglichst hoch sind und Verschlackungs- und Staub- bzw. Metallauswurfverluste möglichst gering ausfallen.

Zur Erhöhung der Trefferquote und damit zur Vermeidung von Nachbehandlungen wird heutzutage bei Konverterprozessen nach einer bestimmten Prozessablaufperiode eine Metallprobe für die Analysenbestimmung genommen und die Temperatur gemessen. Für die Durchführung gibt es dabei zwei unterschiedliche Möglichkeiten:
1. Verwendung einer Sublanze für die Probenahme und für die Temperaturmessung
2. Kippen der Anlage, um manuell eine Löffelprobe zu nehmen und die Temperatur zu messen, wozu das Sauerstoffblasen unterbrochen werden muss.

Beide Möglichkeiten sind auf Metallprobennahmen angewiesen und erfordern im weiteren Vorgang entweder eine Laboranalyse oder eine Schätzung des Kohlenstoffgehaltes. Die Schätzung basiert auf dem thermodynamischen Gleichgewicht des Kohlenstoffs mit Sauerstoff, wozu die Partialdruckmessung des Sauerstoffs und die Temperatur während der Messung bestimmt werden. Im Fall der Handprobenahme wird der metallurgische Prozess in seiner Kinetik durch das unterbrochene Sauerstoffblasen gestört. Der gesamte Vorgang kann bis zu 5 Minuten beanspruchen.

Sofern die Temperaturmessung einen direkten Messwert liefert, ist die Metallanalyse zeitlich im Verzug. Die Versendung der Probe zum Labor, die Probenaufbereitung und der Analysenvorgang beanspruchen im Vergleich mit der Behandlungszeit der Metallschmelze während des Konverterprozesses mit meistens 4 bis 8 Minuten relativ viel Zeit.

Da auch eine berührungslose Messung der Metallbadtemperatur mit beispielsweise einem Strahlungsmessgerät ausscheidet, weil auf der Metallschmelze eine dicke Schlackeschicht schwimmt, deren Temperatur unbestimmt niedriger ist und zusätzlich Staub und heiße Abgase die Messung erschweren, wurden in der Folge deshalb kontinuierliche in situ Messungen der Metallbadtemperatur und Kohlenstoffbestimmungen der Metallschmelze bzw. der Schlacke während des Konverterprozesses vorgeschlagen, die zu einer deutlichen Effizienzsteigerung führten.

So beschreibt die DE 27 07 502 A1 ein Verfahren zum Steuern der Temperatur von geschmolzenem Stahl und des Kohlenstoffgehaltes in einem Sauerstoffkonverter. Hierzu wird von der Überlegung ausgegangen, dass die Temperatur und der Kohlenstoffgehalt des geschmolzenen Stahles äußerst genau vorausgesagt werden können, wenn die Menge des in der Schlacke angesammelten Sauerstoffs oder schlackenbildenden Sauerstoffs aufgrund von Oxidation und die Menge der Entkohlung, die von den Abgasen erhalten wird, betrachtet wird. Für die zur Steuerung erforderlichen entsprechenden Berechnungen sind im Einzelnen folgende Messschritte durchzuführen:
- Gleichzeitiges Messen der Temperatur und des Kohlenstoffgehaltes des geschmolzenem Stahls zu einer geelgneten Zeit (Nachweiszeitpunkt) während des Verlaufs des Blasprozesses ohne Unterbrechung der Sauerstoffzufuhr,
- kontinuierliches Messen der Menge und der Zusammensetzung der Abgase nach diesem Nachweiszeitpunkt,
- kontinuierliches Messen der Menge des Sauerstoffs, der nach dem Nachweiszeitpunkt zugeführt werden muss.

Aus der Druckschrift DE 34 13 589 A1 ist ein Verfahren, und in der Druckschrift US 200310234928 A1 sind ein Verfahren und eine Vorrichtung zur Messung der Zusammensetzung und der Temperatur von flüssigem Stahl und flüssiger Schlacke in einem Schmelzgefäß bekannt.

Aus der DE 2 138 540 sind ein Verfahren und eine Vorrichtung zur kontinuierlichen Analyse von flüssigen Metallbädern bekannt, bei der mittels einer pulsierend ausgebildeten Laserquelle das geschmolzene Metall spektrographisch analysiert wird. Hierzu wird unterhalb der Oberfläche des Metallbades durch einen unter einem Winkel von 40 bis 50° in das Innere des metallurgischen Schmelzgefäßes geführten rohrförmigen Durchbruchs ein inertes Schutzgas unter Überdruck so eingeblasen, dass sich am Ende des Durchbruchs innerhalb der Schmelze eine Gasblase ausbildet. Der Durchbruch ist dabei so angeordnet, dass sein Ende mindestens 20 % der Gesamtbadhöhe unterhalb der Metallbadoberfläche liegt. In einer Zeitspanne von einigen n-sec. bis µ-sec. wird die Metalloberfläche des durch die Gasblase gebildeten Hohlraums mit einem Laserstrahl zur Erzeugung eines Plasmas beaufschlagt. Das in der Gasblase erzeugte Plasma wird zur spektralen Emission angeregt und die für die Zusammensetzung des Metallbades kennzeichnenden vom Plasma emittierten Strahlen mittels eines Lichtleiters kontinuierlich zur einem Spektrographen geleitet. Die so erhaltenen Mess-Spektren liefern nach Vergleich mit einem vorgegebenen Sollspektrum dann die gewünschten Analysenergebnisse.

Das aus der EP 0 250 765 A1 bekannte Verfahren zur kontinuierlichen Analyse von flüssigen Metallbädern verwendet, in ähnlicher Weise wie in der DE 2 138 540 beschrieben, eine pulsierend ausgebildete Laserquelle. Die Messung wird hier aber nicht durch einen seitlich in der Gefäßwandung angeordneten rohrförmigen Durchbruch durchgeführt, sondern hier werden die im Boden des Konverters vorhandenen Rührgasdüsen genutzt, wobei die durch die Rührgasdüsen fallende Strahlung durch verspiegelte Rührgasdüsen und Fotoverstärker auf messbare Intensitäten umgewandelt wird.

Schließlich ist noch die EP 0 362 577 B1 zu nennen, in der ein Verfahren zur optischen Ankopplung eines Elementanalysensystems und eines Lasers an flüssiges Metall in einem Schmelzgefäß beschrieben wird. Durch einen durch eine seitliche Bohrung in der Gefäßwandung auf das flüssige Metall auftreffenden Laserstrahl wird auch hier ein Plasma erzeugt und mit einem Spiegelsystem zu einem Spektrographen geführt und dort analysiert. Hervorzuheben ist, dass das durch die Bohrung zu dessen Abdichtung eingeblasene Inerte Gas eine Temperatur von mehr als 300 °C und bei Verwendung von Argon von mehr als 500 °C hat.

Nachteilig bei den genannten kontinuierlichen spektrographischen Analyseverfahren des geschmolzenen Metalls mit Hilfe einer pulsierend ausgebildeten Laserquelle ist gemeinsam der hohe Verschleiß des Im Flüssigkeitsbereich des metallurgischen Gefäßes angeordneten rohrförmigen Durchbruchs und seine Freihaltung über einen längeren Zeitraum.

Ausgehend von diesem geschilderten Stand der Technik besteht die Aufgabe der Erfindung darin, ein Verfahren zur spektroskopischen Temperatur- und Analysebestimmung von flüssigen Metallbädern in metallurgischen Gefäßen, insbesondere Konvertern anzugeben, mit dem bzw. mit der der Verschleiß des Messsystems gesenkt und die Vorrichtung wirtschaftlich betrieben werden kann.

Die gestellte Aufgabe wird mit den kennzeichnenden Merkmalen des Anspruchs 1 dadurch gelöst, dass die Temperatur- und Analysenbestimmung diskontinuierlich durch eine, bezogen auf die vertikale Position des Gefäßes, oberhalb des Schlacken- und Metallniveaus angeordnete Messdüse in einer leicht geneigten Kippposition des metallurgischen Gefäßes durchgeführt wird.

Die Messdüse ist in einem Bereich eines minimalen Verschleißes in der Gefäßwandung so angeordnet, dass sie sich in der vertikalen Position des metallurgischen Gefäßes während des Blas- bzw. Schmelzbetriebs in einem mit neutralem Schutzgas, beispielsweise N₂, CO₂ oder Ar, freigehaltenen Stand by-Betrieb oberhalb des Schlacken- und Metallniveaus befindet. Die Messdüse befindet sich nur in dem kurzen Messzeitraum während der leicht geneigten Kippposition des metallurgischen Gefäßes unterhalb des Schlacken- und Metallniveaus, wobei bei üblichen Konvertern die Badhöhe oberhalb der Messdüse ca. 1000 mm beträgt. Nur in dieser kritischen Zeitspanne kommt die Messdüse mit flüssigem Metall bzw. Schlacke in Kontakt und muss mit Schutzgas-Überdruck freigehalten werden. Bei Konvertern ist die Messdüse bevorzugt im Bereich des Tragrings in der Gefäßwandung angeordnet.

Der für die Messung einzuhaltende Kippwinkel ergibt sich aus der Geometrie des Gefäßes und aus dem zur Zeit der Messung vorhandenen Badstand oberhalb der Messdüse, wobei für die Temperaturmessung und Analysenbestimmung des flüssigen Metalls der maximale Kippwinkel, bezogen auf die vertikale Position des Gefäßes, bei 35° liegt und für die Temperaturmessung und Analysenbestimmung der Schlacke um ca. 5 bis 10° zu verkleinern ist. Erfindungsgemäß wird die Messung bei einem bestimmten Kippwinkel α durchgeführt, es kann aber auch erforderlich sein, die Messung bei unterschiedlichen Kippwinkeln durchzuführen.

In ähnlicher Weise wie bei den zum Stand der Technik beschriebenen kontinuierlichen Analysenverfahren wird beim diskontinuierlichen Analysenverfahren der Erfindung vom Laserstrahl auf der Metall- bzw. Schlackenoberfläche über ein erzeugtes Plasma eine angeregte spektrale Emission als Mess-Spektrum mit einem Lichtleiter einem Auswertesystem zugeführt, in dem durch Vergleich mit einem Muster-Spektrum die ersuchten Analysenergebnisse berechnet werden. Da die eigentliche Laserstrahlmessung im n-sec. bis µ-sec.-Bereich erfolgt, kann die gesamte Messzeit einschließlich der erforderlichen Kippbewegung des metallurgischen Gefäßes in einer Zeitspanne von ca. 60 sec. durchgeführt werden.

Auch beim erfindungsgemäßen diskontinuierlichen Analysenverfahren sind neben der mit Schutzgas beaufschlagbaren Messdüse ein außerhalb des metallurgischen Gefäßes angeordnetes Lasersystem zur Erzeugung und Erfassung der spektralen Emission der Metall- bzw. Schlackenoberfläche sowie ein Auswertesystem erforderlich, in dem durch Vergleich des gemessenen Mess-Spektrums mit einem Muster-Spektrum die ersuchten Analysenergebnisse berechnet werden. Da im Gegensatz zu den beschriebenen kontinuierlichen Verfahren bei jedem Messvorgang die Messdüse zum und in den Strahlengang des Lasersystems bewegt werden muss, ist, sofern das Lasersystem nicht ortsfest mit dem metallurgischen Gefäß verbunden ist, eine genaue Einhaltung des Kippwinkels bzw. der Kippgeschwindigkeit wichtig.

Weitere Einzelheiten der Erfindung werden nachfolgend an einem in Zeichnungsfiguren dargestellten Ausführungsbeispiel näher erläutert.

Es zeigen:
- Figur 1: Ein Konverter in der vertikalen Blasposition,
- Figur 2: den Konverter der Fig. 1 in der gekippten Messposition.

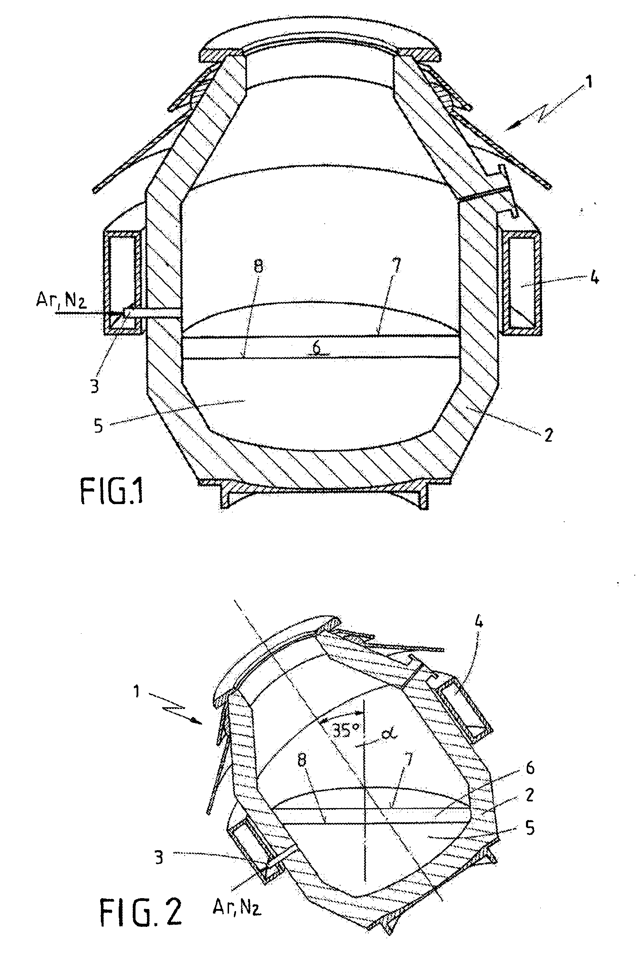

Die Figur 1 zeigt ein metallurgisches Gefäß 1 in Form eines Konverters in der vertikalen Blasposition (die Blaslanze ist nicht dargestellt), gefüllt mit Flüssigmetall 5 und darüber geschichteter Schlacke 6. Im Bereich des Tragrings 4 ist seitlich in der Gefäßwandung 2 mit Abstand oberhalb des Schlacken- bzw. Metallniveaus 7, 8 des Schmelzbades die Messdüse 3 zur Analysenbestimmung nach dem Laserverfahren und zur Einleitung eines Schutzgases angeordnet. Die Düsenöffnung der Messdüse 3 befindet sich in dieser Position praktisch in einem "Stand by-Zustand" in einem Bereich eines minimalen Verschleißes, da sie nur mit heißen Prozessgasen, nicht jedoch mit dem Flüssigmetall 5 oder der Schlacke 6 direkt in Kontakt kommen kann. Es reicht deshalb hier zu ihrer Freihaltung eine Schutzgasspülung mit Argon, Stickstoff bzw. Kohlendioxid.

In der Figur 2 ist der Konverter der Fig. 1 in der gekippten Messposition dargestellt. Durch das Kippen des Konverters befindet sich die Messdüse 3 mit ihrer Düsenöffnung unterhalb des Metallniveaus 8 und innerhalb des Flüssigmetalls 5, so dass eine Analysenbestimmung des Flüssigmetalls 5 in dieser Position durchgeführt werden kann. Zur Zurückdrängung des Flüssigmetalls 5 wird die Messdüse 3 unter Überdruck mit Schutzgas beaufschlagt. Eine Analyse der Schlacke 6 ist in der dargestellten Kippstellung des Konverters nicht möglich, da die Düsenöffnung nicht in Kontakt mit der Schlacke gelangt. Hierzu wäre es dann erforderlich, den Kippwinkel des Konverters um etwa weitere 5 bis 10° so zu vergrößern, dass sich die Düsenöffnung oberhalb des Metallniveaus 8 und innerhalb der Schlacke 6 befindet.

### Bezugszeichenliste

- 1: metallurgisches Gefäß
- 2: Gefäßwandung
- 3: Messdüse
- 4: Tragring
- 5: Flüssigmetall
- 6: Schlacke
- 7: Schlackenniveau
- 8: Metallniveau

## Patentansprüche

1. Verfahren zur Temperatur- und spektroskopischen Analysenbestimmung von flüssigen Metallbädern (5) und Schlacken (6) in einem kippbaren metallurgischen Gefäß (1), insbesondere Konverter, mit Hilfe eines durch eine in der Gefäßwandung (2) angeordnete Messdüse (3) auf die Metall- bzw. Schlackenoberfläche geführten Laserstrahls eines optischen Lasersystems,
**dadurch gekennzeichnet,**
**dass** die Temperaturmessung und Analysenbestimmung diskontinuierlich durch die bezogen auf die vertikale Position des Gefäßes (1) oberhalb des Schlacken- bzw. Metallniveaus (7, 8) angeordnete Messdüse (3) in einer geneigten Kippposition des metallurgischen Gefäßes (1) durchgeführt wird.

2. Verfahren nach Anspruch 1,
**dadurch gekennzeichnet,**
**dass** in der vertikalen Position des metallurgischen Gefäßes (1) die oberhalb des Schlacken- bzw. Metallniveaus (7, 8) befindliche Messdüse (3) durch Einblasen eines neutralen. Schutzgases wie beispielsweise N₂ oder Ar bzw. CO₂ freigehalten wird.

3. Verfahren nach Anspruch 1,
**dadurch gekennzeichnet,**
**dass** in der gekippten Messposition des metallurgischen Gefäßes (1) ein Eindringen von Metall (5) bzw. Schlacke (6) in die unterhalb des Schlacken- bzw. Metallniveaus (7, 8) befindliche Messdüse (3) durch Einblasen mit Überdruck eines neutralen Schutzgases wie beispielsweise N₂, Ar bzw. CO₂ verhindert wird.

4. Verfahren nach Anspruch 3,
**dadurch gekennzeichnet,**
**dass** sich der Kippwinkel aus der Geometrie des Gefäßes (1) und aus dem zur Zeit der Messung vorhandenen Badstand oberhalb der Messdüse (3) ergibt, wobei für die Temperatur- und Analysenbestimmung des flüssigen Metalls (5) der maximale Kippwinkel, bezogen auf die vertikale Position des Gefäßes (1), bei 35° liegt und für die Temperatur- und Analysenbestimmung der Schlacke (6) um ca. 5 bis 10° verkleinert ist.

5. Verfahren nach Anspruch 3 oder 4,
**dadurch gekennzeichnet,**
**dass** die Temperatur- und Analysenbestimmung bei einem bestimmten Kippwinkel durchgeführt wird.

6. Verfahren nach Anspruch 3 oder 4,
**dadurch gekennzeichnet,**
**dass** die Temperatur- und Analysenbestimmung bei unterschiedlichen Kippwinkeln durchgeführt wird.

7. Verfahren nach einem oder mehreren der Ansprüche 1 bis 6,
**dadurch gekennzeichnet,**
**dass** die vom Laserstrahl auf der Metall- bzw. Schlackenoberfläche über ein erzeugtes Plasma angeregte spektrale Emission als Mess-Spektrum mit einem Lichtleiter zu einem Auswertesystem geführt wird, in dem durch Vergleich mit einem Muster-Spektrum die ersuchten Analysenergebnisse berechnet werden.

8. Verfahren nach einem oder mehreren der Ansprüche 1 bis 7,
**dadurch gekennzeichnet,**
**dass** bei der im n-sec. bis µ-sec.-Bereich erfolgenden Laserstrahlmessung die gesamte Messzeit einschließlich der erforderlichen Kippbewegung des metallurgischen Gefäßes (1) in einer Zeitspanne von ca. 60 sec. durchgeführt wird.

## Claims

1. Method for temperature and spectroscopic analysis determination of liquid metal baths (5) and slags (6) in a tippable metallurgical vessel (1), particularly converter, with the help of a laser beam, which is guided onto the metal surface or slag surface via a measuring nozzle (3) arranged in the vessel wall (2), of an optical laser system, **characterised in that** the temperature measurement and analysis determination is performed discontinuously in an inclined tipped position of the metallurgical vessel (1) via the measuring nozzle (3) which, referred to the vertical position of the vessel (1), is arranged above the slag level or metal level (7, 8).

2. Method according to claim 1, **characterised in that** in the vertical position of the metallurgical vessel (1) the measuring nozzle (3) disposed above the slag level or metal level (7, 8) is kept free by blowing in a neutral protective gas such as, for example, N₂ or Ar or CO₂.

3. Method according to claim 1, **characterised in that** in the tipped measuring position of the metallurgical vessel (1) penetration of metal (5) or slag (6) into the measuring nozzle (3) disposed below the slag level or metal level (7, 8) is prevented by blowing in a neutral protective gas such as, for example, N₂, Ar or CO₂ at excess pressure.

4. Method according to claim 3, **characterised in that** the tip angle results from the geometry of the vessel (1) and from the bath state, which prevails at the time of the measurement, above the measuring nozzle (3), wherein for the temperature and analysis determination of the liquid metal (5) the maximum tip angle lies at 35° referred to the vertical position of the vessel (1) and for the temperature and analysis determination of the slag (6) is reduced by approximately 5 to 10°.

5. Method according to claim 3 or 4, **characterised in that** the temperature and analysis determination is carried out at a defined tip angle.

6. Method according to claim 3 or 4, **characterised in that** the temperature and analysis determination is carried out at different tip angles.

7. Method according to one of more of claims 1 to 6, **characterised in that** the spectral emission, which is excited by the laser beam on the metal surface or slag surface by way of generated plasma, is conducted as a measuring spectrum by an optical waveguide to an evaluating system in which the desired analysis results are calculated by comparison with a pattern spectrum.

8. Method according to one or more of claims 1 to 7, **characterised in that** in the case of laser beam measurement carried out in the nanosecond to microsecond range the entire measuring time inclusive of the required tipping movement of the metallurgical vessel (1) is carried out in a time period of approximately 60 seconds.

## Revendications

1. Procédé pour la détermination de la température et de l'analyse spectroscopique de bains de métaux liquides (5) et de scories (6) dans une cuve métallurgique basculante (1), en particulier un convertisseur, à l'aide d'un faisceau laser d'un système de laser optique, guidé sur la surface du métal, respectivement des scories à travers une buse de mesure (3) disposée dans la paroi (2) de la cuve, **caractérisé en ce que** la mesure de la température et la détermination de l'analyse sont réalisées en discontinu à travers la buse de mesure (3) disposée au-dessus du niveau des scories, respectivement du métal (7, 8), en se rapportant à la position verticale de la cuve (1), dans une position de basculement inclinée de la cuve métallurgique (1).

2. Procédé selon la revendication 1, **caractérisé en ce que**, dans la position verticale de la cuve métallurgique (1), la buse de mesure (3) qui se trouve au-dessus du niveau des scories, respectivement du métal (7, 8), est maintenue à l'état non entravé par insufflation d'un gaz de protection neutre comme par exemple du N₂ ou du Ar, respectivement du CO₂.

3. Procédé selon la revendication 1, **caractérisé en ce que**, dans la position basculée de mesure de la cuve métallurgique (1), on empêche une pénétration du métal (5), respectivement des scories (6) dans la buse de mesure (3) se trouvant en dessous du niveau des scories, respectivement du métal (7, 8), par insufflation avec une surpression d'un gaz de protection neutre comme par exemple du N₂, du Ar, respectivement du CO₂.

4. Procédé selon la revendication 3, **caractérisé en ce qu'**on obtient l'angle de basculement à partir de la géométrie de la cuve (1) et à partir du niveau du bain au-dessus de la buse de mesure (3), en vigueur au moment de la mesure, procédé dans lequel, pour la détermination de la température et de l'analyse du métal liquide (5), l'angle de basculement maximal s'élève à 35°, rapporté à la position verticale de la cuve (1), l'angle en question étant diminué à concurrence d'environ 5 à 10° pour la détermination de la température et de l'analyse des scories (6).

5. Procédé selon la revendication 3 ou 4, **caractérisé en ce qu'**on effectue la détermination de la température et de l'analyse à un angle de basculement déterminé.

6. Procédé selon la revendication 3 ou 4, **caractérisé en ce qu'**on effectue la détermination de la température et de l'analyse à des angles de basculement différents.

7. Procédé selon une ou plusieurs des revendications 1 à 6, **caractérisé en ce que** l'émission spectrale activée par le faisceau laser sur la surface du métal, respectivement des scories via un plasma qui s'est formé, est guidée à titre de spectre de mesure avec un conduit de lumière jusqu'à un système d'évaluation dans lequel on calcule les résultats de l'analyse sollicitée par comparaison avec un spectre modèle.

8. Procédé selon une ou plusieurs des revendications 1 à 7, **caractérisé en ce que**, lors de la mesure par le faisceau laser ayant lieu dans la plage de l'échelle des nanosecondes à l'échelle des microsecondes, le temps de mesure total, dans lequel est inclus le mouvement de basculement requis de la cuve métallurgique (1), se situe dans un laps de temps d'environ 60 secondes.
